# EUROPÄISCHE PATENTSCHRIFT

(11) **EP 2 066 522 B1**
(45) Veröffentlichungstag und Bekanntmachung des Hinweises auf die Patenterteilung: **10.10.2012**
(21) Anmeldenummer: 07801251.5
(22) Anmeldetag: 13.08.2007
(51) Int. Cl.: B60L 13/08

(54) **MAGNETANORDNUNG FÜR MAGNETSCHWEBEFAHRZEUGE**
MAGNET ARRANGEMENT FOR MAGNETIC LEVITATION VEHICLES
ARRANGEMENT D'AIMANTS POUR VEHICULES A SUSTENTATION MAGNETIQUE

(30) Priorität: 12.09.2006 DE 102006043378
(43) Veröffentlichungstag der Anmeldung: 10.06.2009
(73) Patentinhaber: ThyssenKrupp Transrapid GmbH, 34127 Kassel (DE)
(72) Erfinder: ZHENG, Qinghua, 82024 Taufkirchen (DE); FRANTZHELD, Jürgen, 81476 München (DE); LÖSER, Friedrich, 85521 Riemerling (DE)
(74) Vertreter: Lorenz, Bernd Ingo Thaddeus
(86) Internationale Anmeldenummer: PCT/DE2007/001461
(87) Internationale Veröffentlichungsnummer: WO 2008/031388

(56) Entgegenhaltungen:
- WO-A-2005/090115
- DE-A1-102004 013 692
- US-A- 3 820 470
- BITTAR A ET AL: "A new approach to the levitation control of an electromagnetic suspension vehicle" CONTROL APPLICATIONS, 1998. PROCEEDINGS OF THE 1998 IEEE INTERNATIONAL CONFERENCE ON TRIESTE, ITALY 1-4 SEPT. 1998, NEW YORK, NY, USA,IEEE, US, Bd. 1, 1. September 1998 (1998-09-01), Seiten 263-267, XP010307267 ISBN: 0-7803-4104-X

## Beschreibung

Die Erfindung betrifft eine Magnetanordnung der im Oberbegriff des Anspruchs 1 angegebenen Gattung.

Bekannte Magnetanordnungen dieser Gattung weisen wenigstens einen Sensor auf, der zur Ermittlung des Abstands einer Magnetpolfläche von einer leitfähigen Reaktionsschiene für das Magnetschwebefahrzeug und zur Regelung der Größe des Spalts zwischen der Magnetpolfläche und der Reaktionsschiene dient (z. B. DE 31 16 036 C2, EP 0 753 718 B1).

Bei der Reaktionsschiene handelt es sich z. B. um einen Langstator, der aus einer Vielzahl von hintereinander angeordneten Statorpaketen zusammengesetzt und Teil eines Langstator-Linearmotors für das Magnetschwebefahrzeug ist. Sensoren für derartige Magnetanordnungen enthalten in der Regel einen mit wenigstens einer Mess- bzw. Sensorspule versehenen Sensorkopf und einen dem Sensorkopf zugeordneten Elektronik-Baustein, der z. B. Schaltungen enthält, die der Erzeugung, Aufbereitung und/oder Auswertung von Sensorsignalen dienen, und der an eine übliche Regelschaltung mit einem Regler und einem Magnetstromsteller angeschlossen wird, um dadurch die Größe des Spalts zwischen der Magnetpolfläche und der Reaktionsschiene auf einem vorgewählten Sollwert von z. B. 10 mm zu halten.

Die Sensorköpfe der beschriebenen Sensoren sind stets neben einem ausgewählten Magnetpol und so angeordnet, dass sie an dieselbe Ebene wie dessen Magnetpolfläche grenzen. Dabei bilden die Sensorköpfe in der Praxis mit zugeordneten Elektronik-Bausteinen je ein L-förmiges Bauelement, wobei der Sensorkopf in einem neben dem Magnetpol von dessen Magnetwicklung frei gelassenen Raum angeordnet ist und der Elektronik-Baustein an der dem Fahrweg zugewandten Vorderseite der Magnetanordnung zu liegen kommt (z. B. DE 10 2004 012 748 A1 oder ZEVrail Glasers Annalen, Oktober 2003, Sonderheft "Transrapid", S. 62, 63). Ein derart ausgebildeter und angeordneter Sensor arbeitet zwar einwandfrei, genügt aber noch nicht allen gewünschten Anforderungen.

Als nachteilig wird z. B. empfunden, dass sich der Sensor zusammen mit dem zugehörigen Magnetpol beim Betrieb eines Magnetschwebefahrzeugs bewegt und daher wie dieser hohen mechanischen Belastungen ausgesetzt ist. Diese Belastungen könnten sich ungünstig auf den Elektronik-Baustein und die Regelung des Spalts auswirken. Zwar sind aus Gründen der Redundanz meistens zwei derartige Sensoren vorhanden. Dennoch sollte der Ausfall von Elektronik-Komponenten nach Möglichkeit vermieden werden, weil eine sichere Regelung der Spaltgröße eine unabdingbare Voraussetzung für den Schwebezustand und damit für den Betrieb eines Magnetschwebefahrzeugs ist.

Ein weiterer Nachteil der bekannten Magnetanordnungen resultiert aus der Tatsache, dass die Oberfläche des Sensorkopfs exakt bündig mit der Magnetpolfläche angeordnet sein sollte, deren Spalt zur Reaktionsschiene überwacht wird. Das erfordert eine aufwendige Befestigungstechnik und führt daher neben einer Erhöhung der Zahl der Bauteile auch zu einer Verringerung der Ausfallsicherheit des Sensors.

Ausgehend davon liegt der Erfindung das technische Problem zugrunde, die Magnetanordnung der eingangs bezeichneten Gattung so auszubilden, dass die genannten Mängel weitgehend bzw. ganz vermieden werden.

Zur Lösung dieses Problems dienen die kennzeichnenden Merkmale des Anspruchs 1.

Die Erfindung bringt den Vorteil mit sich, dass der Sensorkopf in die Magnetanordnung integriert und ein fester Bestandteil von dieser ist. Dadurch werden einerseits aufwendige Maßnahmen zur Montage und Justierung des Sensorkopfs überflüssig, andererseits besteht keine Gefahr mehr, dass sich der Sensorkopf beim Betrieb des Magnetschwebefahrzeugs lösen und dadurch das Spaltsignal verfälschen kann. Außerdem führt die Trennung der Elektronik-Bausteine von den Sensorköpfen zu der Möglichkeit, die Elektronik-Bausteine bei Bedarf gefedert an der Magnetanordnung zu lagern oder an einem von der Magnetanordnung entfernten Ort so zu montieren, dass sie die Bewegungen der Magnetpole nicht mitmachen brauchen. In beiden Fällen sind die Elektronik-Bausteine vor späteren Beschädigungen durch mechanische Erschütterungen od. dgl. geschützt, was die Auswahlsicherheit des Sensors wesentlich vergrößert.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische, perspektivische Darstellung eines bekannten, zwei Magnetanordnungen aufweisenden Moduls eines Magnetschwebefahrzeugs;
Fig. 2 eine schematische und perspektivische Darstellung eines Sensorkopfs der Magnetanordnung nach Fig. 1;
Fig. 3 einen Elektronik-Baustein des Sensors mit nachfolgender Regelschaltung für einen Magnetpol der Magnetanordnung nach Fig. 1;
Fig. 4 die Vorderansicht einer Magnetanordnung mit einem einzigen Magnetpol und einem diesem zugeordneten, erfindungsgemäßen Sensor;
Fig. 5 eine Seitenansicht der Magnetanordnung nach Fig. 4; und
Fig. 6 und 7 den Fig. 4 und 5 entsprechende Ansichten einer Magnetanordnung mit drei nebeneinander angeordneten Magnetpolen und zwei diesen zugeordneten erfmdungsgemäßen Sensoren.

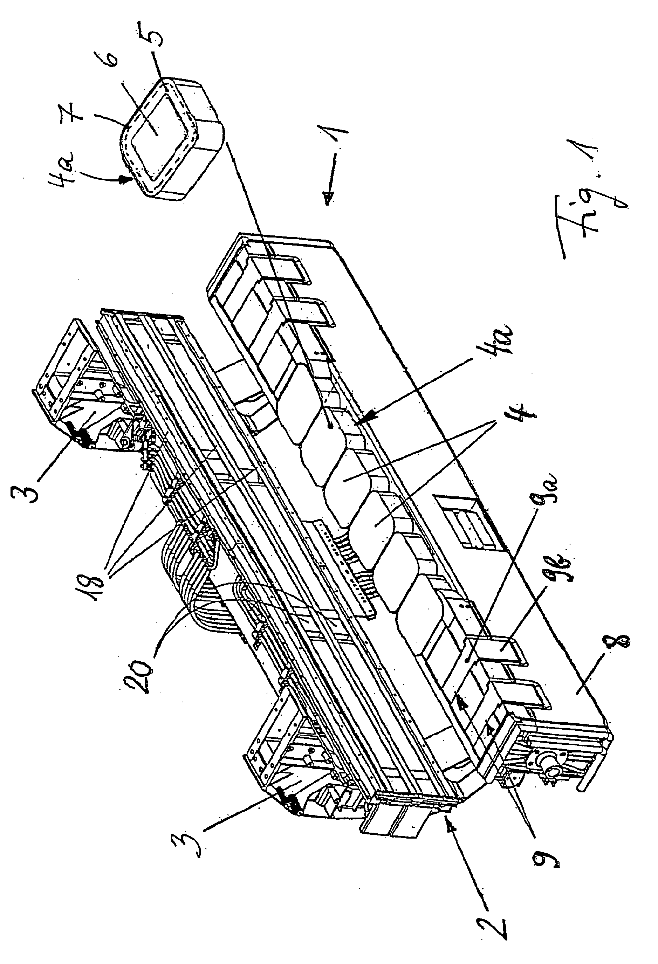

Fig. 1 zeigt schematisch einen bei Magnetschwebefahrzeugen verwendeten Modul mit einer ersten Magnetanordnung 1 in Form eines Tragmagneten und mit einer zweiten Magnetanordnung 2 in Form eines Führmagneten. Der Modul ist an Gestellbügeln 3 befestigt, die in bekannter Weise mit einem Schwebegestell od. dgl. eines Wagenkastens des Magnetschwebefahrzeugs verbunden sind.

Die Magnetanordnung 1 für die Funktion "Tragen" enthält im Ausführungsbeispiel zwölf hintereinander angeordnete Magnetpole 4, deren vorzugsweise elektrisch gruppenweise in Reihe geschaltete Wicklungen 5 und Kerne 6, wie in Fig. 1 für einen Magnetpol 4a vergrößert dargestellt ist, normalerweise rundum von einer z. B. aus Epoxidharz bestehenden Korrosionsschutzschicht 7 umgeben sind. Die Kerne 6 sind untereinander durch nicht gezeigte Polrücken miteinander und durch nicht gezeigte Polwangen mit einem Magnetrückenkasten 8 fest verbunden und in einer Längsrichtung der Magnetanordnung 1 hintereinander angeordnet, die im eingebauten Zustand in der Regel der Längs- bzw. Fahrtrichtung des Magnetschwebefahrzeugs entspricht.

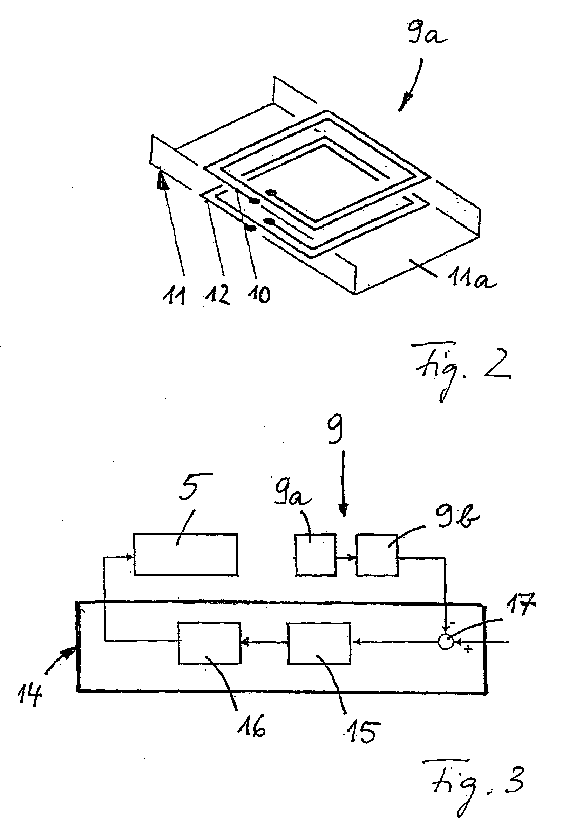

Zur Regelung des Stromflusses durch die Wicklungen 5 derart, dass die Größe eines Spalts zwischen den Magnetpolen 4 und einer nicht gezeigten Reaktionsschiene, z. B. einem Langstator, während des Betriebs des Magnetschwebefahrzeugs konstant bleibt, dient wenigstens ein Sensor 9 pro Gruppe der Magnetpole 4 (Fig. 1) mit einem aus Fig. 2 ersichtlichen Sensorkopf 9a und einem aus Fig. 3 ersichtlichen Elektronik-Baustein 9b. Wie Fig. 1 zeigt, besteht der bekannte Sensor 9 insgesamt aus einem einstückigen, L-förmigen Bauelement, wobei der Sensorkopf 9a zwischen zwei benachbarten Magnetpolen 4 angeordnet ist, während der Elektronik-Baustein 9b an der Vorderseite der Magnetanordnung 1 liegt.

Gemäß Fig. 2 enthält der Sensorkopf 9a z. B. wenigstens eine Sensor- bzw. Messspule 10, die in der Öffnungsebene eines zur Reaktionsschiene hin offenen, leitenden (metallischen) Gehäuses 11 angeordnet ist. Zusätzlich kann der Sensorkopf 9a mit wenigstens einer weiteren Spule 12 versehen sein, die z.B. einem Boden 11a des Gehäuses 11 zugewandt und zwischen diesem und der Sensorspule 10 angeordnet ist.

Fig. 3 zeigt in vereinfachter Darstellung den Elektronik-Baustein 9b, der in einem nicht näher dargestellten Gehäuse angeordnet ist. Der Baustein 9b enthält zur Erzeugung, Aufbereitung und/oder Auswertung von Sensorsignalen bestimmte Schaltungen und ist an eine Regelschaltung 14 für die zugeordnete Gruppe von Magnetpolen angeschlossen. Diese Regelschaltung enthält z.B. einen Regler 15, einen Magnetstromsteller 16 und einen Vergleicher 17. Der Vergleicher 17 ist an den Ausgang des Elektronik-Bausteins 9b und einen Sollwertgeber angeschlossen und liefert an einem mit dem Regler 15 verbundenen Ausgang in bekannter Weise ein Signal, das der Differenz aus der aktuellen Spaltgröße (Istwert) und einem festen oder adaptierten Sollwert proportional ist. Der Regler 15 ermittelt daraus ein Stellsignal für den Magnetstromsteller 16, der seinerseits den Strom durch die Wicklung 5 des zugehörigen Magentpols bzw. durch die Wicklungen der zugehörigen Magnetpolgruppe so steuert, daß der Spalt eine im wesentlichen konstante Größe annimmt und während der Fahrt des Magnetschwebfahrzeugs beibehält.

Während in Fig. 2 und 3 die Komponenten eines Sensors 9 dargestellt sind, zeigt Fig. 1, dass die Magnetanordnung 1 vorzugsweise an jedem Ende je zwei derartige Sensoren 9 enthält. Dadurch kann an jedem Ende der Magnetanordnung 9 die Spaltgröße redundant geregelt werden. Bei der bekannten Anordnung (Fig. 1) sind die Sensorköpfe 9a und Elektronik-Bausteine 9b jeweils zu einem einstückigen Bauelement zusammengefasst, das in nicht dargestellter Weise mit der Magnetanordnung verbunden und auf die Magnetpolflächen ausgerichtet werden muss.

Die Magnetanordnung 2 für die Funktion "Führen" kann im Hinblick auf die Zahl, Ausbildung und Anordnung von Magnetpolen 18 (Fig. 1) anders als die Magnetanordnung 1 ausgebildet sein. Auch die Magnetpole 18 sind jedoch mit Sensoren 20 versehen, die zweckmäßig prinzipiell wie die Sensoren 9 ausgebildet und angeordnet sind und dazu dienen, den Spalt zwischen den Magnetpolen 18 und einer Reaktionsschiene in Form einer Seitenführschiene zu bestimmen. Die Sensoren 20 weisen ebenfalls Sensorköpfe und Elektronik-Bausteine auf, so dass insoweit auf Fig. 2 und 3 verwiesen werden kann.

Magnetanordnungen, Spaltsensoren und Regelkreise der beschriebenen Art sind aus den eingangs angegebenen Druckschriften allgemein bekannt, die hiermit durch Referenz auf sie zum Gegenstand der vorliegenden Offenbarung gemacht werden, um Wiederholungen zu vermeiden.

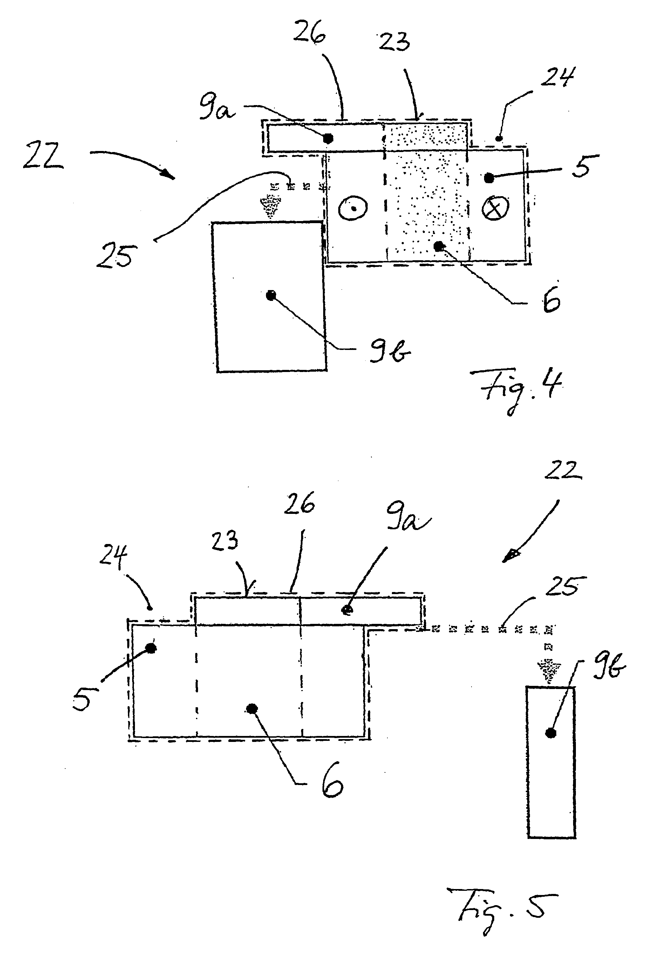

Fig. 4 und 5 zeigen ein erstes und derzeit als am besten empfundenes Ausführungsbeispiel der Erfindung anhand einer Magnetanordnung mit einem einzigen Magnetpol 22. Dieser enthält wie in Fig. 1 einen Kern 6 mit einer der Reaktionsschiene zuzuwendenden Magnetpolfläche 23 und eine den Kern 6 umgebende Wicklung 5. Die Wicklung 5 ist gegenüber der Magnetpolfläche 23 zurückgesetzt, d. h. sie endet in einer unterhalb der Magnetpolfläche 23 liegenden Ebene, so dass zwischen ihr und der von der Magnetpolfläche 23 gebildeten Ebene ein den Kern 6 umgebender Freiraum 24 entsteht.

Der Freiraum 24 dient zur zumindest teilweisen Aufnahme eines z. B. nach Fig. 2 ausgebildeten Sensorkopfs 9a. Im speziellen Fall der Fig. 4 (Seitenansicht) liegt der Sensorkopf 9a etwa zur Hälfte in dem Freiraum 24, während er mit seiner anderen Hälfte die Wicklung 5 seitlich überragt. Außerdem ist der Sensorkopf 9a entgegen Fig. 2 vom Elektronik-Baustein 9b körperlich getrennt und nur durch ein elektrisches Anschlusskabel 25 elektrisch mit diesem verbunden. Dadurch ist es möglich, den Elektronik-Baustein 9b unabhängig von der Lage des Sensorkopfs 9a an einer praktisch beliebigen Stelle der Magnetanordnung und insbesondere so zu montieren, dass er die Bewegungen des Magnetpols 22 beim Betrieb des Magnetschwebefahrzeugs nicht mitmachen muss. Alternativ ist es möglich, den Elektronik-Baustein 9b mit Hilfe einer geeigneten Federung so am Magnetpol 22 oder am Magnetrückenkasten 8 (Fig. 1) zu lagern, dass er gegen abrupte Bewegungen weitgehend geschützt ist. Dadurch ist sichergestellt, dass die Lebensdauer der in ihm befindlichen elektrischen Bauelemente nicht durch ständige mechanische Bewegungen begrenzt wird. Außerdem ergibt sich der Vorteil, dass die relative Lage des Elektronik-Bausteins 9b zum Magnetpol 22 unkritisch ist, d. h. keine Justierarbeiten erforderlich macht. Schließlich kann der Elektronik-Baustein 9b, wenn er getrennt vom Magnetpol 22 angeordnet wird, auch mit anderen elektrischen Bauelementen kombiniert werden.

Der Sensorkopf 9a wird erfindungsgemäß in den Magnetpol 22 integriert und mit diesem zu einer einstückigen Baueinheit zusammengefasst. Dies erfolgt dadurch, dass zumindest der Kern 6 und der Sensorkopf 9a, vorzugsweise aber auch die Wicklung 5 nach ihrem aus Fig. 4 ersichtlichen Zusammenfügen mit einer gemeinsamen Korrosionsschutzschicht 26 umgeben werden, die in Fig. 4 und 5 durch eine gestrichelte Linie angedeutet ist. Dadurch ergibt sich der Vorteil, dass der Sensorkopf 9a nur bei der Herstellung des Magnetpols 22 einmal genau auf die Magnetpolfläche 23 ausgerichtet werden muss und nach dem Vergießen mit einem Epoxidharzgemisch od. dgl. seine relative Lage zur Magnetpolfläche 23 beibehält. Weiter wird dadurch erreicht, dass der Sensorkopf 9a nach der richtigen Montage des Magnetpols 22 im oder am Magnetrückenkasten 8 automatisch seine richtige Lage relativ zur Magnetpolfläche 23 einnimmt, d. h. es werden auch für den Sensorkopf 9a umständliche und nachträglich vorzunehmende Justier- und Befestigungsarbeiten vollständig vermieden.

Wie Fig. 5 zeigt, ragt der Sensorkopf 9a auch nach vom etwas über die Wicklung 5 des Magnetpols 22 hinaus. Dadurch ergibt sich die Möglichkeit, das Anschlusskabel 25 unbehindert nach unten aus dem Sensorkopf 9a herauszuführen. Alternativ wäre es aber auch möglich, den Sensorkopf 9a nach vom bündig mit der Außenseite des Kerns 6 abschließen zu lassen. Die im Einzelfall vorgenommene Dimensionierung des Sensorkopfs 9a hängt insbesondere von dem zur Verfügung stehenden Platz und davon ab, eine wie große Fläche von der beispielhaft dargestellten Messspule erfasst werden soll, um ein ausreichend starkes Messsignal zu erzeugen.

Die Umhüllung von Magnetpolen der hier interessierenden Art mit einer Korrosionsschutzschicht ist prinzipiell bekannt (z. B. DE 197 03 497 A1). Für die Zwecke der vorliegenden Erfindung kann das bekannte Verfahren in analoger Weise angewendet werden, indem der Sensorkopf 9a vor dem Einlegen des Magnetpols 22 in das Gießwerkzeug in der erforderlichen Weise positioniert wird, ggf. unter Anwendung geeigneter Positioniermittel.

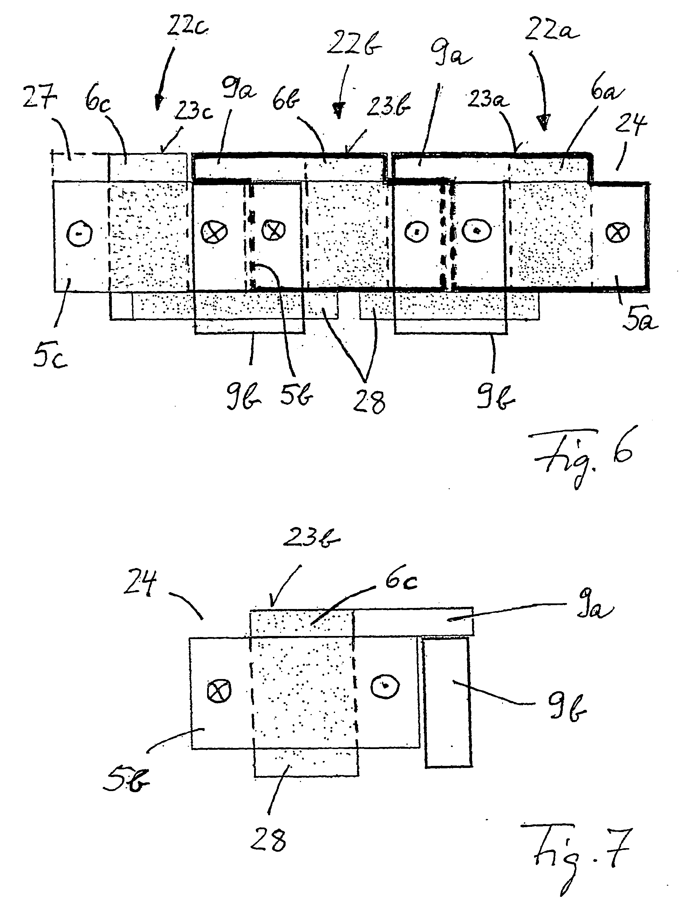

Fig. 6 und 7 zeigen ein zweites Ausführungsbeispiel der Erfindung anhand einer Magnetanordnung mit drei Magnetpolen 22a, 22b und 22c, wobei gleiche Teile mit denselben Bezugszeichen wie in Fig. 4 und 5 und zusätzlich mit den Buchstaben "a", "b" und "c" bezeichnet und verdeckte Linien gestrichelt dargestellt sind.

Aus Fig. 6 ist ersichtlich, dass der Magnetpol 22a, bestehend aus einem Kern 6a, einer Wicklung 5a und einem Sensorkopf 9a, genauso wie der Magnetpol 22 nach Fig. 4 ausgebildet ist. Der in Fig. 4 gezeigte, halb über die Wicklung 5 hinaus (nach links) ragende Teil des Sensorkopfs 9a liegt in Fig. 6 in einem dem Freiraum 24 entsprechenden, dem Magnetpol 22a zugewandten Freiraum des nach links folgenden, benachbarten Magnetpols 22b der Magnetanordnung. Eine Verbindung dieses Teils des Sensorkopfs 9a mit dem Magnetpol 22b ist nicht erforderlich, da der Sensorkopf 9a fest mit dem Magnetpol 22a verbunden ist und beide Magnetpole 22a, 22b positionsgenau im Magnetrückenkasten 8 (Fig. 1) montiert werden. Außerdem zeigt Fig. 6, dass der Magnetpol 22b, bestehend aus einem Kern 6b, einer Wicklung 5b und einem weiteren Sensorkopf 9a, identisch zum Magnetpol 22a ausgebildet ist. Die Umrisslinien der beiden Magnetpole 22a, 22b sind, um dies deutlich zu machen, in Fig. 6 mit dickeren Linien als die übrigen Teile gezeichnet. Daraus ist ersichtlich, dass der Sensorkopf 9a des Magnetpols 22b ebenfalls zur Hälfte (nach links) über die Wicklung 5b hinausragt, so dass mit einer entsprechend verschachtelten Bauweise ein weiterer Magnetpol nach links angeschlossen werden könnte.

Die Korrosionsschutzschichten 26, die die Teile 5a, 6a und 9b einerseits und die Teile 5b, 6b und 9a andererseits umgeben und zu einer festen, einheitlichen Baueinheit verbinden, sind in Fig. 6 und 7 zur Vermeidung von Unklarheiten nicht dargestellt.

Wie Fig. 1 erkennen lässt, stellt die Anordnung nach Fig. 6 im wesentlichen die Situation dar, wie sie sich bei Anwendung der Erfindung am rechten Ende einer Magnetanordnung mit zwölf Magnetpolen 4 ergibt. Sollen sich daher an den Magnetpol 22b in Fig. 6 nach links analog zu Fig. 1 weitere, keine Sensoren 9 aufweisende Magnetpole (z. B. 22c) anschließen, dann wird der in Fig. 6 ganz links verbleibende Freiraum des nächsten folgenden Magnetpols 22c zweckmäßig mit einem bis zur entsprechenden Magnetpolfläche 23c reichenden, gestrichelt angedeuteten Füllstück 27 aus einem magnetisch neutralen Material versehen. Die nächsten folgenden, in Fig. 6 nicht dargestellten Magnetpole würden dann jeweils eine Wicklung aufweisen, die nach oben etwa bis zur entsprechenden Magnetpolfläche erstreckt ist, weil für diese Magnetpole keine Freiräume 24 mehr benötigt werden. Das Füllstück 27 überbrückt in diesem Fall eine zwischen dem Magnetpol 22c und dem nachfolgenden Magnetpol entstehende Stufe.

An dem in Fig. 1 linken Ende der Magnetanordnung können entsprechende Sensoren vorgesehen werden, indem deren Sensorköpfe 9a z. B. nach rechts über die zugehörigen Wicklungen hinausragen.

Die Sensoren nach Fig. 6 weisen zweckmäßig ihnen einzeln zugeordnete Elektronik-Bausteine 9b auf, die auf der Vorderseite der jeweiligen Magnetanordnung angeordnet sind und einander zugewandte Teile der Wicklungen von zwei benachbarten Magnetpolen 22a, 22b bzw. 22b, 22c überdecken. Nach Fig. 7, die analog zu Fig. 5 eine Seitenansicht eines einzigen Magnetpols 22b zeigt, sind die Elektronik-Bausteine 9b hier zwar unmittelbar unterhalb des betreffenden Sensorkopfs 9a angeordnet, aber wie in Fig. 4 und 5 körperlich von den Sensorköpfen 9a getrennt und nur durch ein nicht dargestelltes Anschlusskabel elektrisch mit diesen verbunden. Auch bei diesem Ausführungsbeispiel können die Elektronik-Bausteine 9b daher ohne Beeinträchtigung der Funktion der Sensorköpfe 9a gefedert gelagert werden.

Die Erfindung ist nicht auf die beschriebenen Ausführungsbeispiele beschränkt, die auf vielfache Weise abgewandelt werden können. Insbesondere ergibt sich aus den Zeichnungen, dass die Zahl der Magnetpole pro Magnetanordnung in weiten Grenzen variiert werden kann. Zusätzlich zu dem wenigstens einen, mit einem Sensor 9 versehenen Magnetpol 22 können weitere Magnetpole 22b, 22c mit oder ohne Sensoren vorhanden sein. Auch die Zahl derjenigen Magnetpole innerhalb einer Magnetanordnung, die mit einem Sensor versehen sind, kann in Abhängigkeit vom Einzelfall unterschiedlich gewählt werden. Dabei kann es sich sowohl um Magnetanordnungen für die Funktion "Tragen" als auch um solche für die Funktion "Führen" handeln. Weiter ist klar, dass die Sensorköpfe 9a im Gegensatz zu Fig. 4 und 7 nicht aus einem einzigen Teil bestehen müssen, das in die einander zugewandten Freiräume von zwei benachbarten Magnetpolen eingelegt wird (Fig. 6), sondern auch aus zwei oder mehr elektrisch miteinander verbundenen Teilen bestehen könnten, von denen z. B. in Fig. 4 einer in dem Freiraum 24 links vom Kern 6 (und/oder vor diesem) und der andere in dem Freiraum 24 rechts vom Kern 6 (und/oder hinter diesem) angeordnet ist. In diesem Fall würde der Sensorkopf 9a vorzugsweise insgesamt rundum bündig mit der äußeren Mantelfläche der betreffenden Wicklung 5 abschließen. Eine Anordnung von Sensorteilen vor oder hinter dem Kern 6 ist allerdings in der Regel nur dann sinnvoll, wenn die mit den Kernen 6 zusammenwirkenden Reaktionsschienen in entsprechender Weise nach vorn oder hinten über die Kerne 6 hinausragen. Weiter ist klar, dass die beschriebene Magnetanordnung bei Bedarf mit zusätzlichen Bauelementen versehen wird. Hierzu zählen z. B. übliche Magnetrücken 28 (Fig. 6 und 7), die benachbarte Kerne 6a, 6b bzw. 6b, 6c an ihren Unterseiten magnetisch verbinden, und/oder in den Magnetpolflächen 23 versenkt angeordnete, der Stromerzeugung dienende Wicklungen von Lineargeneratoren. Schließlich versteht sich, dass die verschiedenen Teile auch in anderen als den beschriebenen und dargestellten Kombinationen angewendet werden können.

## Patentansprüche

1. Magnetanordnung für Magnetschwebefahrzeuge mit wenigstens einem Magnetpol (22, 22a, 22b, 22c), der einen eine Magnetpolfläche (23, 23a, 23b, 23c) definierenden Kern (6, 6a, 6b, 6c) und eine zur Schaffung eines Freiraums (24) gegenüber der Magnetpolfläche (23, 23a, 23b, 23c) zurückgesetzte Wicklung (5, 5a, 5b, 5c) aufweist, und wenigstens einem Sensor (9) zur Ermittlung des Abstands der Magnetpolfläche (23, 23a, 23b, 23c) von einer Reaktionsschiene für die Magnetschwebefahrzeuge, wobei der Sensor (9) einen zumindest teilweise in dem Freiraum (24) angeordneten Sensorkopf (9a) und einen Elektronik-Baustein (9b) aufweist, wobei der Sensorkopf (9a) körperlich vom Elektronik-Baustein (9b) getrennt und zusammen mit dem Kern (6, 6a, 6b) zu einer einstückigen, mit einer gemeinsamen Korrosionsschutzschicht (26) umgebenen Baueinheit zusammengefasst ist.

2. Magnetanordnung nach Anspruch 1, **dadurch gekennzeichnet, daß** der Sensorkopf (9a) zusammen mit dem Kern (6, 6a, 6b) und der Wicklung (5, 5a, 5b) zu der Baueinheit zusammengefaßt ist.

3. Magnetanordnung nach Anspruch 1 oder 2, **dadurch gekennzeichnet, dass** sie wenigstens zwei benachbarte Magnetpole (22a, 22b) mit einander zugewandten Freiräumen (24) aufweist und der Sensorkopf (9a) je etwa zur Hälfte in jedem der beiden Freiräume angeordnet ist.

4. Magnetanordnung nach Anspruch 1 oder 2, **dadurch gekennzeichnet, daß** der Sensorkopf (9a) wenigstens zwei Teile aufweist, die auf unterschiedlichen Seiten eines demselben Magnetpol (22, 22a, 22b) angehörenden Kerns (6, 6a, 6b) angeordnet sind.

5. Magnetanordnung nach Ansprüche 1 bis 4, **dadurch gekennzeichnet, dass** der Elektronik-Baustein (9b) gefedert gelagert ist.

## Claims

1. A magnet arrangement for magnetic levitation vehicles, featuring at least one magnetic pole (22, 22a, 22b, 22c) with a core (6, 6a, 6b, 6c) that defines a magnetic pole face (23, 23a, 23b, 23c) and with a winding (5, 5a, 5b, 5c) that is set back relative to the magnetic pole face (23, 23a, 23b, 23c) in order to create a free space (24), as well as at least one sensor (9) for determining the distance of the magnetic pole face (23, 23a, 23b, 23c) from a reaction rail for the magnetic levitation vehicles, with the sensor (9) featuring a sensor head (9a) that is at least partially arranged in the free space (24) and an electronic component (9b), wherein the sensor head (9a) is physically separated from the electronic component (9b) and the sensor head and the core (6, 6a, 6b) are combined into a one-piece structural unit that is surrounded by a common corrosion protection layer (26).

2. The magnet arrangement according to Claim 1, **characterized in that** the sensor head (9a) is combined into the structural unit together with the core (6, 6a, 6b) and the winding (5, 5a, 5b).

3. The magnet arrangement according to Claim 1 or 2, **characterized in that** it features at least two adjacent magnetic poles (22a, 22b) with free spaces (24) that face one another, and **in that** about half of the sensor head (9a) is respectively arranged in each of the two free spaces.

4. The magnet arrangement according to Claim 1 or 2, **characterized in that** the sensor head (9a) features at least two parts that are arranged on different sides of a core (6, 6a, 6b) belonging to the same magnetic pole (22, 22a, 22b).

5. The magnet arrangement according to Claims 1 to 4, **characterized in that** the electronic component (9b) is suspended on springs.

## Revendications

1. Dispositif magnétique pour véhicules à sustentation magnétique, comportant au moins un pôle magnétique (22, 22a, 22b, 22c), qui présente un noyau (6, 6a, 6b, 6c) définissant une surface polaire magnétique (23, 23a, 23b, 23c) et un enroulement (5, 5a, 5b, 5c) réinitialisé pour créer un espace libre (24) en face de la surface polaire magnétique (23, 23a, 23b, 23c) et au moins un capteur (9) pour déterminer la distance entre la surface polaire magnétique (23, 23a, 23b, 23c) et un rail réactif pour les véhicules à sustentation magnétique, le capteur (9) présentant une tête de détection (9a) disposée du moins partiellement dans l'espace libre (24) et un module électronique (9b), la tête de détection (9a) étant séparée physiquement du module électronique (9b) et réunie avec le noyau (6a, 6a, 6b) en une unité structurelle entourée d'une couche anticorrosion commune.

2. Dispositif magnétique selon la revendication 1, **caractérisé en ce que** la tête de détection (9a) est réunie avec le noyau (6a, 6a, 6b) et l'enroulement (5, 5a, 5b, 5c) pour former l'unité structurelle.

3. Dispositif magnétique selon la revendication 1 ou 2, **caractérisé en ce qu'**il présente au moins deux pôles magnétiques voisins (22a, 22b) comportant des espaces libres (24) tournés les uns vers les autres et que la tête de détection (9a) est disposée approximativement pour moitié dans chacun des deux espaces libres.

4. Dispositif magnétique selon la revendication 1 ou 2, **caractérisé en ce que** la tête de détection (9a) présente au moins parties qui sont disposées sur des faces différentes d'un seul et même pôle magnétique (22, 22a, 22b).

5. Dispositif magnétique selon les revendications 1 à 4, **caractérisé en ce que** le module électronique (9b) est en appui suspendu.
